# EUROPÄISCHE PATENTSCHRIFT

(11) **EP 2 539 618 B1**
(45) Veröffentlichungstag und Bekanntmachung des Hinweises auf die Patenterteilung: **27.11.2013**
(21) Anmeldenummer: 11706504.5
(22) Anmeldetag: 18.02.2011
(51) Int. Cl.: F16L 21/08, F16L 23/06

(54) **ROHRKUPPLUNG ZUM VERBINDEN ZWEIER ROHRENDEN**
PIPE COUPLING FOR CONNECTING TWO PIPE ENDS
RACCORD DE TUYAU POUR RELIER DEUX EXTRÉMITÉS DE TUYAU

(30) Priorität: 25.02.2010 DE 102010009360
(43) Veröffentlichungstag der Anmeldung: 02.01.2013
(73) Patentinhaber: Weinhold, Karl, 41464 Neuss (DE)
(72) Erfinder: Weinhold, Karl, 41464 Neuss (DE)
(74) Vertreter: Albrecht, Ralf
(86) Internationale Anmeldenummer: PCT/EP2011/052423
(87) Internationale Veröffentlichungsnummer: WO 2011/104184

(56) Entgegenhaltungen:
- WO-A1-2010/000563
- DE-A1- 2 147 924
- DE-A1- 19 837 296

## Beschreibung

Die Erfindung betrifft eine Rohrkupplung zum Verbinden zweier Rohrenden mit zwei als Steckteil und Muffenteil ausgebildeten teilweise ineinander gesteckten Kupplungsteilen, wobei im Kontaktbereich auf der Außenseite des Steckteils und/oder der Innenseite des Muffenteils wenigstens eine Ringnut mit eingelegter Dichtung vorgesehen ist und wobei das Steckteil einen äußeren Ringsteg und das Muffenteil eine Schulter aufweisen, die bei geschlossener Rohrkupplung von einer Kupplungsschelle formschlüssig umfasst werden.

Derartige Rohrkupplungen sind seit langem bekannt und dienen zum lösbaren Befestigen von einzelnen Rohren, um Rohrleitungssysteme zu schaffen (DE 41 05 206 C2, DE 19837296 A1). Hierbei erfolgt die axiale Verbindung nicht mittels einer Verschraubung sondern form- und kraftschlüssig mittels gleichfalls für sich bekannter Kupplungsschellen. Diese Kupplungsschellen sind schnell lösbar und erlauben so eine einfache Montage und Demontage von mit solchen Rohrkupplungen ausgestatteten Rohrleitungssystemen.

Da die bekannten Kupplungsschellen zum Erreichen eines festen Sitzes stets beide Rohrenden benötigen, muss der Vertrieb und Transport von Rohren und Kupplungsschellen separat erfolgen. Es ist zwar theoretisch denkbar, eine Kupplungsschelle auf lediglich ein Rohrende aufzubringen, dies jedoch nur mit einem axialen Spiel, so dass es zu Beschädigungen beim Transport kommen kann.

Der Erfindung liegt daher die Aufgabe zu Grunde, die eingangs genannte und zuvor näher beschriebene Rohrkupplung so auszugestalten und weiterzubilden, dass es möglich ist, ein Rohr jeweils mit einer Kupplungsschelle in Kombination auszuliefern, um den betrieblichen Ablauf zu vereinfachen. Auf diese Weise ist stets die notwendige Anzahl von Kupplungsschellen für die zur Verfügung stehenden Rohre vorhanden und es können keine lose ausgelieferten Kupplungsschellen verloren gehen, wie dies beispielsweise beim Einsatz unter Tage schnell passieren kann. Darüber hinaus ist eine besonders klein bauende und kostengünstige Rohrkupplung erwünscht.

Gelöst wird die Aufgabe bei einer Rohrkupplung gemäß dem Oberbegriff von Anspruch 1 dadurch, dass auf der Außenseite des Steckteils eine Ringnut vorgesehen ist, in die bei geschlossener Rohrkupplung eine im Inneren der Kupplungsschelle angeordneter Führungssteg eingreift. Durch diese Ausgestaltung erfolgt bereits eine form- und kraftschlüssige Verbindung, wenn die Kupplungsschelle lediglich auf das Muffenteil eines Rohres aufgesetzt und dort - ohne eingeschobenes Steckteil - geschlossen wird.

In weiterer Ausgestaltung der Erfindung ist vorgesehen, dass der Führungssteg mittig in der Kupplungsschelle angeordnet ist. Auf diese Weise wird eine beliebige Ausrichtung der Kupplungsschelle mit Bezug auf die Rohrenden erreicht. Bevorzugt ist dabei, dass der Führungssteg als umlaufender Steg ausgebildet ist, es ist jedoch auch denkbar, den Führungssteg nur abschnittsweise auszubilden, wenn die Abschnitte in ihrer Größe und Anordnung ausreichend groß sind, um die geforderte Führungsfunktion erfüllen zu können. Besonders vorteilhaft ist es, wenn die Dichtkante der Ringnut für die Dichtung im geschlossenen Zustand der Rohrkupplung in axialer Richtung innerhalb der Mitte der Ringnut angeordnet ist. Diese Ausgestaltung ist mit Bezug auf Stabilität und Dichtigkeit die bevorzugte Lösung.

Eine weitere Lehre der Erfindung sieht vor, dass die korrespondierenden Flanken von Ringnut und Führungssteg konisch ausgebildet sind. Dadurch wird erreicht, dass der Kontakt nur an den Flanken erfolgt und dass zwischen Ringnut und Führungssteg stets ein Spalt verbleibt, um ungewollte axiale Krafteinleitungen zu vermeiden und stets eine sichere Zentrierung zu ermöglichen.

Gemäß einer weiteren Ausbildung der Erfindung sind auch die Kontaktflächen von Ringsteg und Schulter sowie die inneren Kontaktflächen der Kupplungsschelle als konische Flanken ausgebildet. Auch hier sorgt die Konizität dafür, dass sich beim Verschließen der Kupplungsschelle die beiden freien Rohrenden axial aufeinander zu bewegen und auf diese Weise eine sichere Verbindung gewährleistet wird.

Eine weitere Lehre der Erfindung sieht vor, dass die Konizität der inneren Kontaktflächen der Kupplungsschelle und der korrespondierenden Flanken von Ringnut und Führungssteg unterschiedlich ist. Auf diese Weise ist ein Verkanten der einzelnen Teile beim Lösen der Rohrkupplung zuverlässig ausgeschlossen.

Nach einer weiteren vorteilhaften Ausgestaltung der Erfindung beträgt die Mindesteintauchtiefe des Führungsstegs 1/6 der Höhe der inneren Kontaktflächen der Kupplungsschelle und der Kontaktflächen von Ringnut und Schulter (Hauptdruckfläche). Auf diese Weise wird die Hauptdruckfläche durch den Kontakt des Führungssteges nicht beeinflusst.

Eine besonders klein bauende Rohrkupplung wird in einer weiteren vorteilhaften Ausbildung der Erfindung dadurch erreicht, dass das Steckteil und das Muffenteil jeweils mittels einer V-Naht an den Rohrenden angeschweißt sind. Auf diese Weise kann die erfindungsgemäße Rohrkupplung sehr klein bauen, da die die Rohrenden umgebende Kupplungsschelle nur geringfügig größer sein muss als der Rohraußendurchmesser.

Eine weitere Ausgestaltung der Erfindung sieht vor, dass neben der für die Dichtung vorgesehene Ringnut wenigstens eine Schmierrille angeordnet ist, wobei bevorzugt auf beiden Seiten der Ringnut jeweils eine Schmierrille vorgesehen sind. Auf diese Weise kann eine Verschmutzung der Ringnut oder der darin befindlichen Dichtung weitgehend vermieden werden.

Eine weitere Lehre der Erfindung sieht vor, dass als Kupplungsschelle eine mehrschalige, bevorzugt zweischalige Schelle mit Spannhebel vorgesehen ist. Diese Ausgestaltung ist besonders zweckmäßig, da sie ein besonders schnelles Lösen bzw. Schließen der Kupplungsschelle gewährleistet. Aus diesem Grunde werden solche Kupplungsschellen auch als Schnellspannschellen bezeichnet.

In weiterer bevorzugter Ausgestaltung der Erfindung sind dabei beide Schalen identisch ausgebildet, wobei der Spannhebel nur an einem Schalenende angeordnet ist. Bevorzugt können die Kupplungsschellen Ausnehmungen zur teilweisen Aufnahme des Spannhebels aufweisen, um die Größe der erfindungsgemäßen Rohrkupplung zu minimieren und um ein unbeaufsichtigtes Öffnen eines vorstehenden Spannhebels zuverlässig auszuschließen.

Eine andere Ausgestaltung der Erfindung sieht vor, dass die Kupplungsschelle eine Auflage für den Spannhebel aufweist. Dies ist besonders zum Öffnen der geschlossenen Kupplungsschelle von Vorteil, da am Ende der Auflage ein Freiraum entsteht, in dem der Spannhebel mittels einem geeigneten Werkzeug angehoben werden kann.

Ein weiteres Ausführungsbeispiel der Erfindung betrifft die gleiche Rohrkupplung, wobei die Kupplungsschelle derart modifiziert worden ist, dass sie eine Gewindebohrung zur Aufnahme einer Aufhängeöse aufweist, in die die Aufhängeöse eingeschraubt ist und an ihrem Ende eine Verjüngung aufweist, deren Größe auf die Breite der Ringnut abgestimmt ist und die so weit ins Innere der Kupplungsschelle vorsteht wie der Führungssteg, welcher in diesem Bereich durch die zuvor eingebrachte Bohrung entfernt worden ist. Auf diese Weise findet ein definierter Kraftschluss zwischen der Aufhängeöse und der Rohrkupplung statt. Dadurch, dass die erfindungsgemäße Rohrkupplung keine spezielle Ausrichtung zwischen den ineinander gesteckten Rohrenden und Kupplungsschelle verlangt, kann die Kupplungsschelle stets so angeordnet werden, dass die Aufhängeöse an ihrer Oberseite verläuft.

Diese Ausführungsform ist von besonderem Vorteil, da Rohrleitungssysteme mit den erfindungsgemäß ausgestatteten Rohrkupplungen beispielsweise im untertägigen Bergbau leicht an ihren Aufhängeösen an geeigneter Stelle im Stoß oder an der Firste mittels Ketten oder dergleichen befestigt werden können.

Schließlich sieht eine bevorzugte Ausgestaltung der Erfindung vor, dass das Steckteil, das Muffenteil und die beiden Schellen senkgeschmiedet (senkgeformt) hergestellt sein können, wodurch die erfindungsgemäße Rohrkupplung relativ preisgünstig zu fertigen ist.

Die Erfindung wird nachfolgend anhand einer lediglich bevorzugte Ausführungsbeispiele darstellenden Zeichnung näher erläutert. In der Zeichnung zeigen
- Fig. 1: einen Vertikalschnitt durch eine erfindungsgemäße Rohkupplung entlang der Linie I-I in Fig. 2,
- Fig. 2: eine Kupplungsschelle zur Verwendung mit der erfindungsgemäßen Rohrkupplung in Seitenansicht,
- Fig. 3: ein weiteres Ausführungsbeispiel einer erfindungsgemäßen Rohrkupplung im Vertikalschnitt entlang der Linie III-III in Fig. 4 und
- Fig. 4: ein weiteres Ausführungsbeispiel einer Kupplungsschelle zur Verwendung mit der erfindungsgemäßen Rohrkupplung.

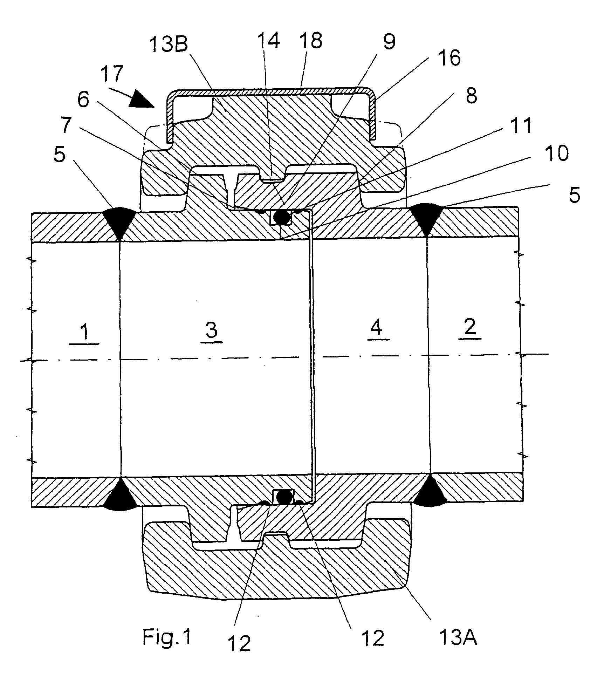

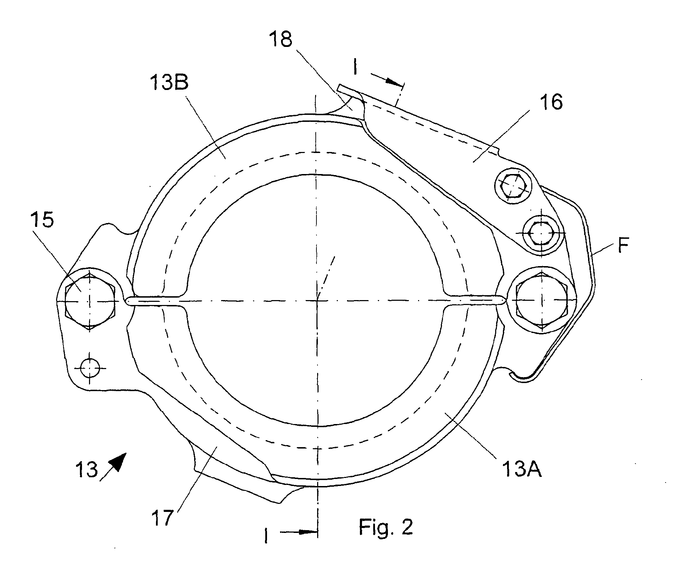

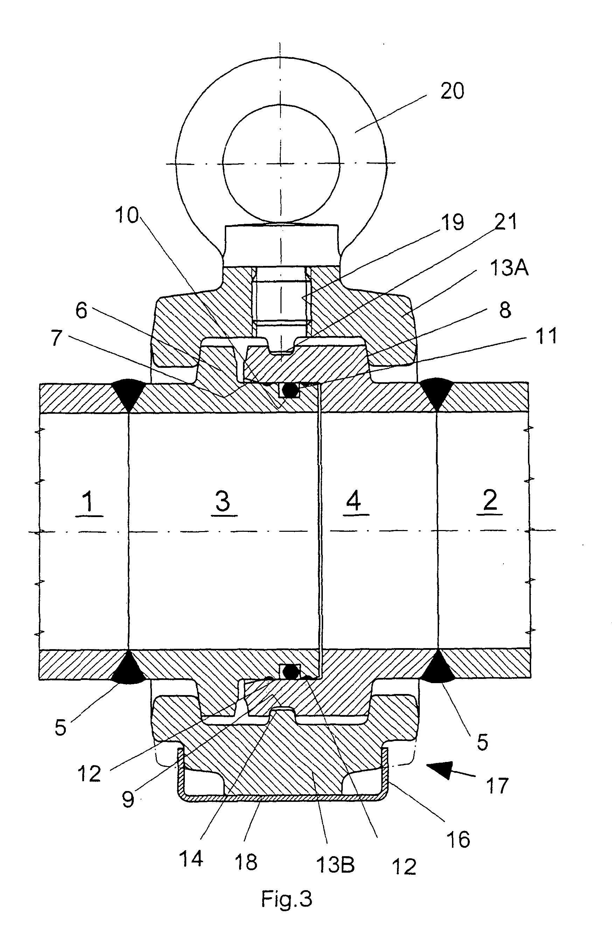

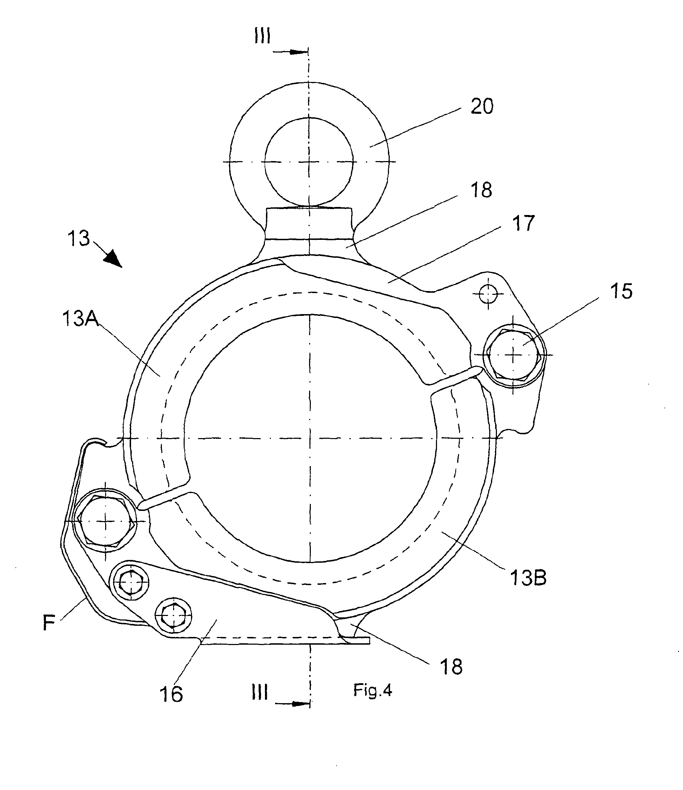

Zur Erläuterung der Erfindung sind zwei Ausführungsbeispiele dargestellt, von denen das erste in den Fig. 1 und 2 und das zweite in den Fig. 3 und 4 gezeigt ist. Dabei bezieht sich die geänderte Ausführungsform lediglich auf die verwendete Kupplungsschelle wie im Weiteren beschrieben werden wird.

Fig. 1 zeigt zwei Rohrenden 1 und 2, die mit einem Steckteil 3 bzw. einem Muffenteil 4 mittels V-Schweißnähten 5 verbunden sind. Das Steckteil 3 weist einenen umlaufenden Ringsteg 6 auf. Das Muffenteil 4 ist an seinem Ende innen mit einer Fase 7 versehen, um das Einführen des Steckteils 3 zu erleichtern. Darüber hinaus weist es vor seiner Verbreiterung zur Aufnahme des Steckteils 3 eine Schulter 8 auf.

Erfindungsgemäß ist auf der Außenseite des Muffenteils 4 eine Ringnut 9 vorgesehen, deren Position sich im dargestellten und insoweit bevorzugten Ausführungsbeispiel etwa mittig über der Projektion des eingesteckten Steckteils 3 befindet.

Für die Dichtung zwischen Steckteil 3 und Muffenteil 4 sorgt eine in eine umlaufende Nut 10 eingelegte Dichtung 11, welche bevorzugt als O-Ring ausgebildet ist. Die Dichtkante der Ringnut 10 für die Dichtung 11 ist dabei innerhalb der Mitte der Ringnut 9 angeordnet. Schmierrillen 12 neben der Ringnut 10 schützen diese und die darin befindliche Dichtung 11 vor Verschmutzung.

Axial gehalten werden die ineinander gesteckten Rohrenden 1 und 2 mittels einer Kupplungsschelle 13, deren Aufbau besonders gut in Fig. 2 erkennbar ist. Sie besteht im dargestellten und soweit bevorzugten Ausführungsbeispiel im Wesentlichen aus zwei Schalen 13A und 13B, welche in ihrem Innern jeweils mit einem sich über die gesamte innere Länge erstreckenden Führungssteg 14 versehen sind, dessen Maße mit denen der Ringnut 9 korrespondieren. Die beiden Schalen 13A und 13B werden über eine Achse 15 (Schraubbolzen) zusammengehalten. Ein Spannhebel 16 verrastet die geschlossenen Kupplungsschalen 13A und 13B unter Überwindung der Kraft einer Bügelfeder F, wie aus Fig. 2 ersichtlich.

Diese geschlossene Stellung ist in Fig. 1 dargestellt, man erkennt deutlich, dass die Führungsstege 14 in die Ringnut 9 eingreifen und so eine axiale Fixierung der Kupplungsschelle 13 auf dem Muffenteil 4 der erfindungsgemäßen Rohrkupplung bewirken. Die Mindesteintauchtiefe der Führungsstege 14 beträgt dabei wenigstens 1/6 der Höhe der inneren Kontaktflächen der Kupplungsschelle 13 bzw. der Kontaktflächen von Ringsteg 6 und Schulter 8 (Hauptdruckfläche). Hierbei sind die seitlichen Kontaktflächen zwischen Ringnut 9 und Führungsstegen 14 konisch ausgebildet, so dass zwischen dem Grund der Ringnut 9 und dem jeweiligen Führungssteg 14 ein Luftspalt verbleibt. Die Konizität ist dabei größer als bei den Kontaktflächen von Ringsteg 6 und Schulter 8, welche auch als konische Flanken ausgebildet sind, um beim Schließen der Kupplungsschelle 13 die beiden Kupplungsteile zunächst formschlüssig zu umgreifen und schließlich kraftschlüssig axial zusammenzuhalten.

Es ist von besonderem Vorteil, dass durch die erfindungsgemäße Ausgestaltung der Rohrkupplung eine feste Fixierung der Kupplungsschelle 13 auf dem Muffenteil 4 auch ohne das zweite mit dem Steckteil 3 versehene Rohrende 1 möglich ist. Auf diese Weise ist es möglich, einzelne Rohre mit darauf "angeflanschten" Kupplungsschellen 13 gemeinsam auszuliefern, was eine Beschädigung von Rohrenden oder Schelle ausschließt und praktische sowie logistische Vorteile mit sich bringt.

Aus Fig. 2 geht ferner hervor, dass die Kupplungsschalen 13A und 13B, welche im dargestellten und insoweit bevorzugten Ausführungsbeispiel identisch ausgeführt sind, mit einer Ausnehmung 17 zur Aufnahme der seitlichen Schenkel des Spannhebels 16 und einer Auflage 18 versehen sind, auf der im geschlossenen Zustand der Spannhebel 16 aufliegt. Dadurch, dass der Spannhebel 16 an seinem freien Ende über die Auflage 18 vorsteht, ist ein leichtes Lösen des Spannhebels 16 durch Anheben mit einem geeigneten Werkzeug jederzeit gewährleistet.

In dem in den Fig. 3 und 4 dargestellten Ausführungsbeispiel ist die Kupplungsschelle 13 im Bereich einer Auflage 18 mit einer Gewindebohrung 19 versehen, in die eine Aufhängeöse 20 einschraubbar ist, wie deutlich aus Fig. 3 hervorgeht. Hierbei ist die Länge des Gewindezapfens der - in Fig. 3 um 90° gedreht dargestellten - Aufhängeöse 20 so ausgewählt, dass das verjüngte Ende 21, welches einen Durchmesser aufweist, der dem des Führungssteges 14 entspricht, an Stelle des Führungssteges 14 in die Ringnut 9 eingreifen kann, wie gleichfalls gut in Fig. 3 erkennbar ist. Auf diese Weise ist es möglich, einen Kraftschluss zwischen der Aufhängeöse 20 und der Kupplung zu erreichen. Dies ist besonders zweckmäßig für solche Einsatzfälle, in denen die mit erfindungsgemäßen Rohrkupplungen ausgestatteten Rohre aufgehängt werden müssen. Die Aufhängung findet hier an den verstärkten Stellen des Rohrleitungssystems, nämlich den Rohrkupplungen statt. Wie aus Fig. 4 ersichtlich, befindet sich die Aufhängeöse 20 gegenüber dem geschlossenen Spannhebel 16, so dass dieser stets frei bedienbar bleibt.

## Patentansprüche

1. Rohrkupplung zum Verbinden zweier Rohrenden (1, 2) mit zwei als Steckteil (3) und Muffenteil (4) ausgebildeten teilweise ineinander gesteckten Kupplungsteilen, wobei im Kontaktbereich auf der Außenseite des Steckteils (3) und/oder der Innenseite des Muffenteils (4) wenigstens eine Ringnut (10) mit eingelegter Dichtung (11) vorgesehen ist und wobei das Steckteil (3) einen äußeren Ringsteg (6) und das Muffenteil (4) eine Schulter (7) aufweisen, die bei geschlossener Rohrkupplung von einer Kupplungsschelle (13) formschlüssig umfasst werden, **dadurch gekennzeichnet, dass** auf der Außenseite des Muffenteils (4) eine Ringnut (9) vorgesehen ist, in die bei geschlossener Rohrkupplung ein im Inneren der Kupplungsschelle (13) angeordneter Führungssteg (14) eingreift.

2. Rohrkupplung nach Anspruch 1, **dadurch gekennzeichnet, dass** der Führungssteg (14) mittig in der Kupplungsschelle (13) angeordnet ist und/oder dass der Führungssteg (14) als im Wesentlichen umlaufender Steg ausgebildet ist.

3. Rohrkupplung nach einem der Ansprüche 1 bis 2, **dadurch gekennzeichnet, dass** die Dichtkante der Ringnut (10) für die Dichtung (11) im geschlossenen Zustand der Rohrkupplung in axialer Richtung der innerhalb Mitte der Ringnut (9) angeordnet ist.

4. Rohrkupplung nach einem der Ansprüche 1 bis 3, **dadurch gekennzeichnet, dass** die korrespondierenden Flanken von Ringnut (9) und Führungssteg (14) konisch ausgebildet sind und/oder dass die Kontaktflächen von Ringsteg (6) und Schulter (8) sowie die inneren Kontaktflächen der Kupplungsschelle (13) als konische Flanken ausgebildet sind.

5. Rohrkupplung nach Anspruch 4, **dadurch gekennzeichnet, dass** die Konzität der inneren Kontaktflächen der Kupplungsschelle (13) und der korrespondierenden Flanken von Ringnut (9) und Führungssteg (14) unterschiedlich ist.

6. Rohrkupplung nach einem der Ansprüche 4 oder 5, **dadurch gekennzeichnet, dass** die Mindesteintauchtiefe des Führungsstegs (14) 1/6 der Höhe der inneren Kontaktflächen der Kupplungsschelle (13) bzw. der Kontaktflächen von Ringsteg (6) und Schulter (8) beträgt.

7. Rohrkupplung nach einem der Ansprüche 1 bis 6, **dadurch gekennzeichnet, dass** das Steckteil (3) und das Muffenteil (4) jeweils mittels einer V-Naht (5) an den Rohrenden (1, 2) angeschweißt sind.

8. Rohrkupplung nach einem der Ansprüche 1 bis 7, **dadurch gekennzeichnet, dass** neben der Ringnut (10) für die Dichtung (11) wenigstens eine Schmierrille (12) angeordnet ist, wobei insbesondere auf beiden Seiten der Ringnut (10) jeweils eine Schmierrille (12) vorgesehen ist.

9. Rohrkupplung nach einem der Ansprüche 1 bis 8, **dadurch gekennzeichnet, dass** als Kupplungsschelle eine mehrschalige Schelle vorgesehen ist.

10. Rohrkupplung nach einem der Ansprüche 1 bis 9, **dadurch gekennzeichnet, dass** als Kupplungsschelle (13) eine zweischalige Schelle mit Spannhebel (16) vorgesehen ist, wobei insbesondere beide Schalen (13A, 13B) identisch ausgebildet sind.

11. Rohrkupplung nach Anspruch 9 oder 10, **dadurch gekennzeichnet, dass** die Kupplungsschelle (13) Ausnehmungen (17) zur teilweisen Aufnahme des Spannhebels (16) und/oder eine Auflage (18) für den Spannhebel (16) aufweist.

12. Rohrkupplung nach einem der Ansprüche 9 bis 11, **dadurch gekennzeichnet, dass** die Kupplungsschelle (13) eine Gewindebohrung (19) zur Aufnahme einer Aufhängeöse (20) aufweist, wobei insbesondere die Aufhängeöse (20) in die Gewindebohrung (19) eingeschraubt ist und an ihrem Ende (21) eine Verjüngung aufweist, deren Größe auf die Breite der Ringnut (9) abgestimmt ist und die soweit ins Innere der Kupplungsschelle (13) vorsteht wie der Führungssteg (14).

13. Rohrkupplung nach einem der Ansprüche 1 bis 12, **dadurch gekennzeichnet, dass** das Stegteil (3), das Muffenteil (4) und die beiden Schalen (13A und 13B) aus geschmiedeten Elementen bestehen.

## Claims

1. A pipe coupling for connecting two pipe ends (1, 2) having two coupling parts implemented as a male part (3) and a female part (4) which are partially mated, at least one annular groove (10) having an inserted seal (11) being provided in the contact region on the outer side of the male part (3) and/or the inner side of the female part (4), and the male part (3) comprising an outer annular tab (6) and the female part (4) comprising a shoulder (7) enclosed by a coupling clip (13) in a form-fit manner when the pipe coupling is closed, **characterised in that** there is provided on the outer side of the female part (4) an annular groove (9) into which a guide tab (14) disposed on the inner side of the coupling clip (13) is inserted when the pipe coupling is closed.

2. The pipe coupling according to Claim 1,
**characterised in that** the guide tab (14) is positioned centrally in the coupling clip (13) and/or
that the guide tab (14) is in the form of a substantially circumferential tab.

3. The pipe coupling according to one of the Claims 1 and 2,
**characterised in that** the sealing edge of the annular groove (10) for the seal (11) is disposed in the axial direction in the centre of the annular groove (9) in the closed state of the pipe coupling.

4. The pipe coupling according to either of Claims 1 to 3,
**characterised in that** the corresponding flanks of the annular groove (9) and the guide tab (14) are conical in form and/or
that the contact surfaces of the annular tab (6) and the shoulder (8) and the inner contact surfaces of the coupling clip (13) are in the form of conical flanks.

5. The pipe coupling according to Claim 4,
**characterised in that** the conicity of the inner contact surfaces of the coupling clip (13) and of the corresponding flanks of the annular groove (9) and the guide tab (14) is different.

6. The pipe coupling according to any of Claims 4 or 5,
**characterised in that** the minimum immersion depth of the guide tab (14) is 1/6 of the height of the inner contact surfaces of the coupling clip (13) and the contact surfaces of the annular tab (6) and the shoulder (8).

7. The pipe coupling according to any of Claims 1 to 6,
**characterised in that** the male part (3) and the female part (4) are respectively welded on to the pipe ends (1, 2) by means of a V-shaped seam (5).

8. The pipe coupling according to any of Claims 1 to 7,
**characterised in that** at least one lubrication channel (12) is disposed next to the annular groove (10) for the seal (11) and/or wherein in particular a lubrication channel (12) is provided respectively on both sides of the annular groove (10).

9. The pipe coupling according to any of Claims 1 to 8,
**characterised in that** a multi-shell clip is provided as the coupling clip.

10. The pipe coupling according to any of Claims 1 to 9,
**characterised in that** a two-shell clip with a clamping lever is provided as the coupling clip (13), wherein in particular both shells (13A, 13B) are identical in design.

11. The pipe coupling according to Claims 9 or 10,
**characterised in that** the coupling clip (13) has recesses (17) for partially holding the clamping lever (16) and/or
a support (18) for the clamping lever (16).

12. The pipe coupling according to any of Claims 9 to 11,
**characterised in that** the coupling clip (13) has a threaded hole (19) for accommodating a suspension eye (20), wherein in particular the suspension eye (20) is screwed into the threaded hole (19) and at its end (21) has a taper the size of which is matched to the width of the annular groove (9) and which projects as far into the inside of the coupling clip (13) as the guide tab (14).

13. The pipe coupling according to any of Claims 1 to 12,
**characterised in that** the male part (3), the female part (4) and the two shells (13A and 13B) are made from forged elements.

## Revendications

1. Raccord de tuyau pour le raccordement de deux extrémités de tuyaux (1, 2) avec deux pièces d'accouplement s'emboîtant partiellement l'une dans l'autre, l'une formée en pièce mâle (3) et l'autre en manchon (4), la surface de contact sur le côté extérieur de la pièce mâle (3) ou du côté intérieur du manchon (4) étant pourvue d'au moins une rainure à anneau (10) avec joint intégré (11) et la pièce mâle (3) présente une nervure annulaire extérieure (6) et le manchon (4) un épaulement (7) qui, lorsque le raccord de tuyau est refermé, sont entourés d'une coquille d'accouplement (13) par complémentarité de forme, **caractérisé en ce que** le côté extérieur du manchon (4) présente une rainure à anneau (9) dans laquelle une nervure de guidage (14) située à l'intérieur de la coquille d'accouplement (13) s'insère lorsque le raccord de tuyau est fermé.

2. Raccord de tuyau selon la revendication 1, **caractérisé en ce que** la nervure de guidage (14) est située au centre de la coquille d'accouplement (13) et/ou que la nervure de guidage (14) est formée en nervure essentiellement en nervure circulaire.

3. Raccord de tuyau selon une des revendications 1 à 2, **caractérisé en ce que** l'arête d'étanchéité de la rainure à anneau (10) pour le joint (11) est positionnée en direction axiale du centre intérieur de la rainure à anneau (9) lorsque le raccord de tuyau est fermé.

4. Raccord de tuyau selon une des revendications 1 à 4, **caractérisé en ce que** les flancs correspondants de la rainure à anneau (9) et de la nervure de guidage (14) sont de forme conique et/ou que les surfaces de contact de la nervure annulaire (6) et de l'épaulement (8), ainsi que les surfaces de contacts intérieures de la coquille d'accouplement (13), ont la formes de flancs coniques.

5. Raccord de tuyau selon la revendication 4, **caractérisé en ce que** la conicité des surfaces de contact intérieures de la coquille d'accouplement (13) et des flancs correspondants diffère de celle de la rainure à anneau (9) et de la nervure de guidage (14).

6. Raccord de tuyau selon l'une des revendications 4 ou 5, **caractérisé en ce que** la profondeur d'immersion minimale de la nervure de guidage (14) correspond au 1/6 de la hauteur des surfaces de contact intérieures de la coquille d'accouplement (13) ou des surfaces de contact de la nervure annulaire (6) et de l'épaulement (8).

7. Raccord de tuyau selon une des revendications 1 à 6, **caractérisé en ce que** la pièce mâle (3) et le manchon (4) sont tous deux soudés aux extrémités de tuyaux (1, 2) à l'aide d'une soudure en V (5).

8. Raccord de tuyau selon une des revendications 1 à 7, **caractérisé en ce qu'**au moins un sillon de graissage (12) est situé à côté de la rainure à anneau (10) pour le joint (11), où plus particulièrement les deux côtés de la rainure à anneau (10) disposent chacun d'un sillon de graissage (12).

9. Raccord de tuyau selon une des revendications 1 à 8, **caractérisé en ce qu'**une coquille à couches multiples sert de coquille d'accouplement.

10. Raccord de tuyau selon une des revendications 1 à 9, **caractérisé en ce qu'**une coquille à deux couches munie d'un levier tendeur (16) sert de coquille d'accouplement (13), lesdites deux couches (13A, 13B) étant plus particulièrement de formes identiques.

11. Raccord de tuyau selon les revendications 9 ou 10 , **caractérisé en ce que** la coquille d'accouplement (13) présente des exclusions (17) pour la prise partielle du levier tendeur (16) et/ou une surface d'appui (18) pour le levier tendeur (16).

12. Raccord de tuyau selon les revendications 9 ou 10 , **caractérisé en ce que** la coquille d'accouplement (13) présente un trou taraudé (19) pour la prise d'un oeillet d'accrochage (20), ledit oeillet d'accrochage (20) étant plus particulièrement vissé dans le trou taraudé (19) et présentant, à son extrémité (21), un amincissement dont la taille s'harmonise avec la largeur de la rainure à anneau (9) et qui s'insère aussi loin dans la coquille d'accouplement (13) que la nervure de guidage (14).

13. Raccord de tuyau selon une des revendications 1 à 9, **caractérisé en ce que** la pièce mâle (3), le manchon (4) et les deux couches (13A et 13B) sont tous composés d'éléments soudés.
